# EUROPEAN PATENT APPLICATION

(11) **EP 4 841 852 A1**
(43) Date of publication of application: **18.11.2026**
(21) Application number: 26178277.5
(22) Date of filing: 12.05.2026
(51) Int. Cl.: H02J 3/38, F03D 7/02, F03D 7/04, H02J 3/46, H02J 3/388

(54) **SYSTEM AND METHOD FOR CONVERTER CONTROL OF AN INVERTER-BASED RESOURCE**

(30) Priority: 12.05.2025 US 202519205063
(71) Applicant: GE Vernova Infrastructure Technology LLC, Greenville, SC 29615 (US)
(72) Inventor: Howard, Dustin F., Greenville, 29615 (US)
(74) Representative: Zimmermann & Partner Patentanwälte mbB

(57) **Abstract**

A method for switching a control mode of a plurality of inverter-based resources (IBRs) connected to an electrical grid includes operating, via respective controllers of the plurality of IBRs, each of the plurality of IBRs in an active IBR control mode. The method also includes receiving, via the respective controllers of the plurality of IBRs, a request to operate each of the plurality of IBRs in an updated IBR control mode. Further, the method includes sequentially stopping, via the respective controllers of the plurality of IBRs, each of the plurality of IBRs in response to the request. Moreover, the method includes switching, via the respective controllers of the plurality of IBRs, from the active IBR control mode to the updated IBR control mode for each of the plurality of IBRs after a respective one of the plurality of IBRs is stopped. In addition, the method includes restarting, via the respective controllers of the plurality of IBRs, each of the plurality of IBRs after the active IBR control mode is switched to the updated IBR control mode in the respective one of the plurality of IBRs.

## Description

### FIELD

The present disclosure relates generally to inverter-based resources, such as wind turbine power systems, and more particularly to a system and method for converter control of inverter-based resources that selectively switches between multiple control modes.

### BACKGROUND

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is typically geared to a generator for producing electricity.

Wind turbines can be distinguished in two types: fixed speed and variable speed turbines. Conventionally, variable speed wind turbines are controlled as current sources connected to a power grid. In other words, the variable speed wind turbines rely on a grid frequency detected by a phase locked loop (PLL) as a reference and inject a specified amount of current into the grid. The conventional current source control of the wind turbines is based on the assumptions that the grid voltage waveforms are fundamental voltage waveforms with fixed frequency and magnitude and that the penetration of wind power into the grid is low enough so as to not cause disturbances to the grid voltage magnitude and frequency.

Thus, the wind turbines simply inject the specified current into the grid based on the fundamental voltage waveforms. However, with the rapid growth of the wind power, wind power penetration into some grids has increased to the point where wind turbine generators have a significant impact on the grid voltage and frequency.

Moreover, power generation projects utilizing inverter-based resources are increasingly being connected to weak AC transmission networks. One of the reasons causing weaker grid connections is the displacement of conventional synchronous generation by inverter-based resources, which make the grid collectively weaker due to the loss of voltage-source characteristics of synchronous generation. Additionally, the loss of inertia contributed by the synchronous machines leads to more rapid frequency changes in the grid, which may have a destabilizing effect on the inverter-based resource(s).

Historically, power grids generally operate with enough synchronous generation connected at any given time to give stable voltage and frequency throughout the power grid. Since conventional inverter-based resources rely on a relatively stable grid voltage and frequency to operate stably, the synchronous generation connected to the grid are key enablers for conventional inverter-based resources. However, power grids are increasingly having portions of time in which penetration levels of inverter-based resources are becoming very large, e.g., > 60%. Conventional inverter-based resources may be approaching their limitation of stability as penetration of synchronous generation approaches 0%.

Accordingly, the present disclosure is directed to a system and method for converter control of inverter-based resources, such as wind turbines, that selectively switches between multiple control modes to coordinate demands of grid loads with the power/energy availability of the inverter-based resource.

### BRIEF DESCRIPTION

Aspects and advantages of the invention will be set forth in part in the following description, or may be obvious from the description, or may be learned through practice of the invention.

In an aspect, the present disclosure is directed to a method for switching a control mode of a plurality of inverter-based resources (IBRs) connected to an electrical grid. The method includes operating, via respective controllers of the plurality of IBRs, each of the plurality of IBRs in an active IBR control mode. The method also includes receiving, via the respective controllers of the plurality of IBRs, a request to operate each of the plurality of IBRs in an updated IBR control mode. Further, the method includes sequentially stopping, via the respective controllers of the plurality of IBRs, each of the plurality of IBRs in response to the request. Moreover, the method includes switching, via the respective controllers of the plurality of IBRs, from the active IBR control mode to the updated IBR control mode for each of the plurality of IBRs after a respective one of the plurality of IBRs is stopped. In addition, the method includes restarting, via the respective controllers of the plurality of IBRs, each of the plurality of IBRs after the active IBR control mode is switched to the updated IBR control mode in the respective one of the plurality of IBRs.

In another aspect, the present disclosure is directed to a wind farm. The wind farm includes a plurality of wind turbines each comprising a respective converter controller comprising at least one processor. The at least one processor is configured to perform a plurality of operations. The plurality of operations include operating a respective one of the plurality of wind turbines in an active wind turbine control mode. The plurality of operations also includes receiving a request to operate the respective one of the plurality of wind turbines in an updated wind turbine control mode. Further, the plurality of operations includes stopping the respective one of the plurality of wind turbines based on a sequence for stopping the plurality of wind turbines. Moreover, the plurality of operations includes switching from the active wind turbine control mode to the updated wind turbine control mode after the respective one of the plurality of wind turbines is stopped. In addition, the plurality of operations includes restarting the respective one of the plurality of wind turbines after the active wind turbine control mode is switched to the updated wind turbine control mode.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a wind turbine according to the present disclosure;
FIG. 2 illustrates a simplified, internal view of an embodiment of a nacelle according to the present disclosure;
FIG. 3 illustrates a schematic view of an embodiment of a wind turbine electrical power system suitable for use with the wind turbine shown in FIG. 1;
FIG. 4 illustrates a schematic view of an embodiment of a wind farm having a plurality of wind turbines according to the present disclosure;
FIG. 5 illustrates a block diagram of an embodiment of a controller according to the present disclosure;
FIG. 6 illustrates a one-line diagram of an embodiment of a doubly-fed wind turbine generator with converter controls for grid-following application according to the present disclosure;
FIG. 7A illustrates a one-line diagram of an embodiment of a doubly-fed wind turbine generator with converter controls for grid-forming application according to the present disclosure;
FIG. 7B illustrates a schematic diagram of a stator voltage regulator of a doubly-fed wind turbine generator to achieve grid-forming control according to the present disclosure;
FIG. 8A illustrates a schematic diagram of a one-line diagram of an embodiment of a doubly-fed wind turbine generator with converter controls for hybrid grid-following and grid-forming application according to the present disclosure;
FIG. 8B illustrates a modified version of a schematic diagram of a stator voltage regulator of a doubly-fed wind turbine generator to achieve hybrid grid-following/grid-forming control according to the present disclosure; and
FIG. 9 illustrates a flow diagram of an embodiment of method of switching between converter control modes via a controller of an inverter-based resource connected to an electrical grid according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Existing renewable generation sources, such as doubly-fed wind turbine generators (WTGs), typically include a converter control system that operates the WTG in one control mode. For instance, the converter control system may operate under "grid-following" (GFL) control and utilize fast current-regulation loops to control active and reactive power exchanged with the grid. In particular, GFL control includes functions that manage the voltage and reactive power in a manner that results in a command for the reactive component of current. Wide-bandwidth current regulators then develop commands for voltage to be applied by the converters to the system, such that the actual currents closely track the commands.

However, when wind turbines are located in a weak grid, wind turbine power fluctuations may lead to an increase in magnitude and frequency variations in the grid voltage. These fluctuations may adversely affect the performance and stability of the GFL control.

Alternatively, the converter control system may operate under "grid-forming" (GFM) control wherein the IBR acts as a voltage source behind an impedance (primarily reactance) and provides a voltage-source characteristic, where the angle and magnitude of the voltage are controlled to achieve the regulation functions needed by the grid. In particular, the impedance of the IBR is normally dictated by the hardware of the system, such as reactors, transformers, or rotating machine impedances. With this structure, current will flow according to the demands of the grid, while the converter contributes to establishing a voltage and frequency for the grid. This characteristic is comparable to conventional generators based on a turbine driving a synchronous machine.

However, implementation of GFM controls on practical equipment, such as wind turbines, involves a complex balance between stability needs of the grid and respecting limitations of hardware components. Equipment limitations related to active power and/or energy are particularly complex if rotating equipment is involved due to potential electromechanical resonances, speed limitations, or other drivetrain related loading constraints.

In view of the foregoing, the present disclosure is directed to a converter control system and method for switching one or more inverter-based resources (IBR) between multiple control modes. For example, in an embodiment, a plant controller may provide a request to switch converter control modes to each of a plurality of converter controls in a wind farm. The converter controls can then sequentially stop (e.g., ceases current exchange with the electrical grid of) a plurality of respective IBRs in response to the request. The request to switch converter control modes may be needed in certain circumstances, such as grid instability, bridge overmodulation, equipment overload conditions (such as current, power, torque, or speed overload), or by request from a grid operator. The converter controls can then switch control modes of the respective IBRs once the respective IBR is stopped. Further, the converter controls can sequentially restart (e.g., resumes current exchange with the electrical grid) the plurality of respective IBRs after switching the converter control modes for the respective IBR. As such, in one example, a first converter control can stop a first IBR, switch the converter control mode of the first IBR, and restart the first IBR. Following the first IBR being restarted, a second converter control can perform the same process to switch the converter control mode of a second IBR. Accordingly, the same process can be completed until the converter control mode has been switched for each IBR in the wind farm. As another example, the process for switching the converter control mode of a subsequent IBR can begin after a current IBR is stopped but prior to the current IBR being restarted. Sequentially stopping and restarting the IBRs to facilitate the converter control mode switching can minimize disturbances to the electrical grid that can result from the stopping and restarting of large groups of IBRs simultaneously.

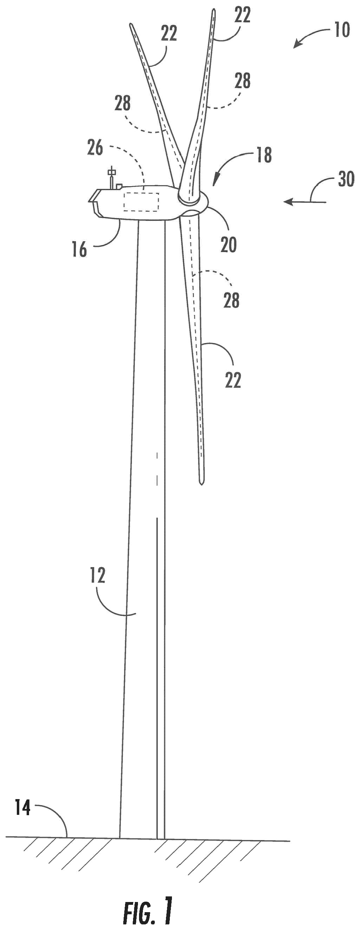

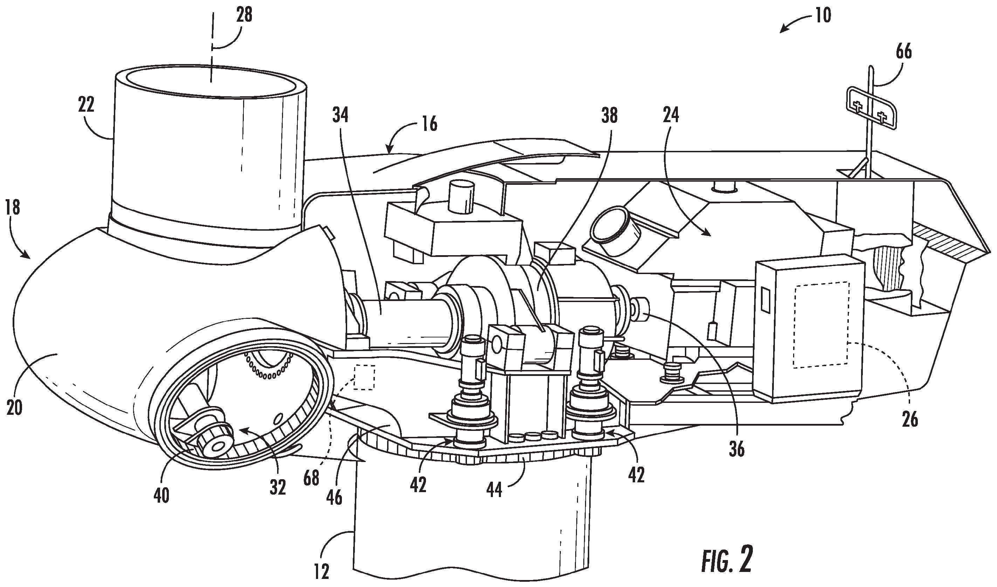

Referring now to the drawings, FIG. 1 illustrates a perspective view of an embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine 10. Further, the controller 26 may be communicatively coupled to any number of the components of the wind turbine 10 in order to control the operation of such components and/or implement a corrective or control action. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals. Accordingly, the controller 26 may generally be configured to control the various operating modes (e.g., start-up or shut-down sequences), de-rating or up-rating the wind turbine, and/or individual components of the wind turbine 10.

Referring now to FIG. 2, a simplified, internal view of an embodiment of the nacelle 16 of the wind turbine 10 shown in FIG. 1 is illustrated. As shown, a generator 24 may be disposed within the nacelle 16 and supported atop a bedplate 46. In general, the generator 24 may be coupled to the rotor 18 for producing electrical power from the rotational energy generated by the rotor 18. For example, as shown in the illustrated embodiment, the rotor 18 may include a rotor shaft 34 coupled to the hub 20 for rotation therewith. The rotor shaft 34 may, in turn, be rotatably coupled to a generator shaft 36 of the generator 24 through a gearbox 38. As is generally understood, the rotor shaft 34 may provide a low speed, high torque input to the gearbox 38 in response to rotation of the rotor blades 22 and the hub 20. The gearbox 38 may then be configured to convert the low speed, high torque input to a high speed, low torque output to drive the generator shaft 36 and, thus, the generator 24.

The wind turbine 10 may also have one or more pitch drive mechanisms 32 communicatively coupled to the wind turbine controller 26, with each pitch adjustment mechanism(s) 32 being configured to rotate a pitch bearing 40 and thus the individual rotor blade(s) 22 about its respective pitch axis 28. In addition, as shown, the wind turbine 10 may include one or more yaw drive mechanisms 42 configured to change the angle of the nacelle 16 relative to the wind (e.g., by engaging a yaw bearing 44 of the wind turbine 10 that is arranged between the nacelle 16 and the tower 12 of the wind turbine 10).

In addition, the wind turbine 10 may also include one or more sensors 66, 68 for monitoring various wind conditions of the wind turbine 10. For example, the incoming wind direction 52, wind speed, or any other suitable wind condition near the wind turbine 10 may be measured, such as through use of a suitable weather sensor 66. Suitable weather sensors may include, for example, Light Detection and Ranging ("LIDAR") devices, Sonic Detection and Ranging ("SODAR") devices, anemometers, wind vanes, barometers, radar devices (such as Doppler radar devices) or any other sensing device which can provide wind directional information now known or later developed in the art. Still further sensors 68 may be utilized to measure additional operating parameters of the wind turbine 10, such as voltage, current, vibration, etc. as described herein.

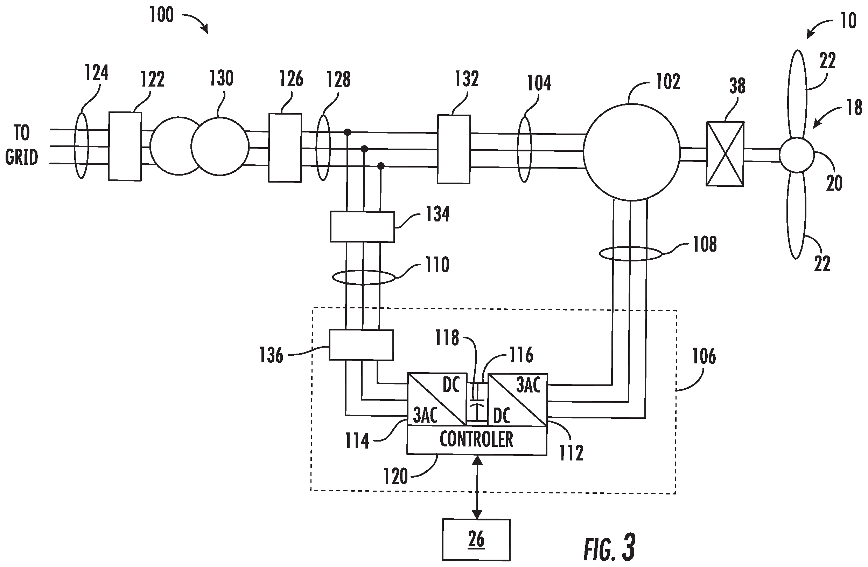

Referring now to FIG. 3, a schematic diagram of an embodiment of a wind turbine power system 100 is illustrated in accordance with aspects of the present disclosure. Although the present disclosure will generally be described herein with reference to the wind turbine 10 shown in FIG. 1, those of ordinary skill in the art, using the disclosures provided herein, should understand that aspects of the present disclosure may also be applicable in other power generation systems, and, as mentioned above, that the disclosure is not limited to wind turbine systems.

In the embodiment of FIG. 3 and as mentioned, the rotor 18 of the wind turbine 10 (FIG. 1) may, optionally, be coupled to the gearbox 38, which is, in turn, coupled to a generator 102, which may be a doubly-fed induction generator (DFIG). As shown, the generator 102 may be connected to a stator bus 104. Further, as shown, a power converter 106 may be connected to the generator 102 via a rotor bus 108, and to the stator bus 104 via a line side bus 110. As such, the stator bus 104 may provide an output multiphase power (e.g., three-phase power) from a stator of the generator 102, and the rotor bus 108 may provide an output multiphase power (e.g., three-phase power) from a rotor of the generator 102. The power converter 106 may also include a rotor side converter (RSC) 112 and a line side converter (LSC) 114. The generator 102 is coupled via the rotor bus 108 to the rotor side converter 112. Additionally, the RSC 112 is coupled to the LSC 114 via a DC link 116 across which is a DC link capacitor 118. The LSC 114 is, in turn, coupled to the line side bus 110.

The RSC 112 and the LSC 114 may be configured for normal operating mode in a three-phase, pulse width modulation (PWM) arrangement using one or more switching devices, such as insulated gate bipolar transistor (IGBT) switching elements. In addition, the power converter 106 may be coupled to a converter controller 120 in order to control the operation of the rotor side converter 112 and/or the line side converter 114 as described herein. It should be noted that the converter controller 120 may be configured as an interface between the power converter 106 and the turbine controller 26 and may include any number of control devices.

In typical configurations, various line contactors and circuit breakers including, for example, a grid breaker 122 may also be included for isolating the various components as necessary for normal operation of the generator 102 during connection to and disconnection from a load, such as the electrical grid 124. For example, a system circuit breaker 126 may couple a system bus 128 to a transformer 130, which may be coupled to the electrical grid 124 via the grid breaker 122. In alternative embodiments, fuses may replace some or all of the circuit breakers.

In operation, alternating current power generated at the generator 102 by rotating the rotor 18 is provided to the electrical grid 124 via dual paths defined by the stator bus 104 and the rotor bus 108. On the rotor bus side 108, sinusoidal multi-phase (e.g., three-phase) alternating current (AC) power is provided to the power converter 106. The rotor side converter 112 converts the AC power provided from the rotor bus 108 into direct current (DC) power and provides the DC power to the DC link 116. As is generally understood, switching elements (e.g., IGBTs) used in the bridge circuits of the rotor side converter 112 may be modulated to convert the AC power provided from the rotor bus 108 into DC power suitable for the DC link 116.

In addition, the line side converter 114 converts the DC power on the DC link 116 into AC output power suitable for the electrical grid 124. In particular, switching elements (e.g., IGBTs) used in bridge circuits of the line side converter 114 can be modulated to convert the DC power on the DC link 116 into AC power on the line side bus 110. The AC power from the power converter 106 can be combined with the power from the stator of generator 102 to provide multi-phase power (e.g., three-phase power) having a frequency maintained substantially at the frequency of the electrical grid 124 (e.g., 50 Hz or 60 Hz).

Additionally, various circuit breakers and switches, such as grid breaker 122, system breaker 126, stator sync switch 132, converter breaker 134, and line contactor 136 may be included in the wind turbine power system 100 to connect or disconnect corresponding buses, for example, when current flow is excessive and may damage components of the wind turbine power system 100 or for other operational considerations. Additional protection components may also be included in the wind turbine power system 100.

Moreover, the power converter 106 may receive control signals from, for instance, the local control system 176 via the converter controller 120. The control signals may be based, among other things, on sensed states or operating characteristics of the wind turbine power system 100. Typically, the control signals provide for control of the operation of the power converter 106. For example, feedback in the form of a sensed speed of the generator 102 may be used to control the conversion of the output power from the rotor bus 108 to maintain a proper and balanced multi-phase (e.g., three-phase) power supply. Other feedback from other sensors may also be used by the controller(s) 120, 26 to control the power converter 106, including, for example, stator and rotor bus voltages and current feedbacks. Using the various forms of feedback information, switching control signals (e.g., gate timing commands for IGBTs), stator synchronizing control signals, and circuit breaker signals may be generated.

The power converter 106 also compensates or adjusts the frequency of the three-phase power from the rotor for changes, for example, in the wind speed at the hub 20 and the rotor blades 22. Therefore, mechanical and electrical rotor frequencies are decoupled and the electrical stator and rotor frequency matching is facilitated substantially independently of the mechanical rotor speed.

Under some states, the bi-directional characteristics of the power converter 106, and specifically, the bi-directional characteristics of the LSC 114 and RSC 112, facilitate feeding back at least some of the generated electrical power into generator rotor. More specifically, electrical power may be transmitted from the stator bus 104 to the line side bus 110 and subsequently through the line contactor 136 and into the power converter 106, specifically the LSC 114 which acts as a rectifier and rectifies the sinusoidal, three-phase AC power to DC power. The DC power is transmitted into the DC link 116. The capacitor 118 facilitates mitigating DC link voltage amplitude variations by facilitating mitigation of a DC ripple sometimes associated with three-phase AC rectification.

The DC power is subsequently transmitted to the RSC 112 that converts the DC electrical power to a three-phase, sinusoidal AC electrical power by adjusting voltages, currents, and frequencies. This conversion is monitored and controlled via the converter controller 120. The converted AC power is transmitted from the RSC 112 via the rotor bus 108 to the generator rotor. In this manner, generator reactive power control is facilitated by controlling rotor current and voltage.

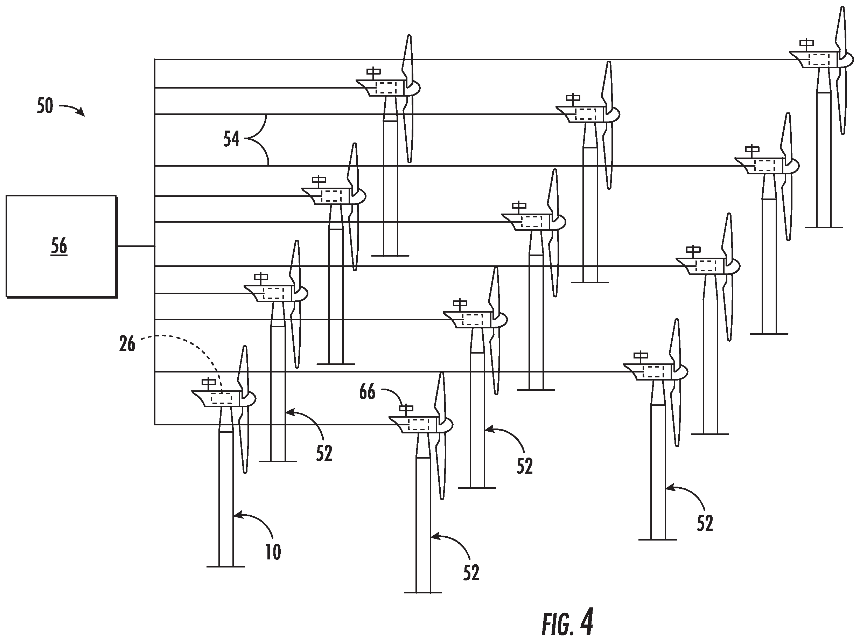

Referring now to FIG. 4, the wind turbine power system 100 described herein may be part of a wind farm 50. As shown, the wind farm 50 may include a plurality of wind turbines 52, including the wind turbine 10 described above, and an overall farm-level controller 56. For example, as shown in the illustrated embodiment, the wind farm 50 includes twelve wind turbines, including wind turbine 10. However, in other embodiments, the wind farm 50 may include any other number of wind turbines, such as less than twelve wind turbines or greater than twelve wind turbines. In an embodiment, the turbine controllers of the plurality of wind turbines 52 are communicatively coupled to the farm-level controller 56, e.g., through a wired connection, such as by connecting the turbine controller 26 through suitable communicative links 54 (e.g., a suitable cable). Alternatively, the turbine controllers may be communicatively coupled to the farm-level controller 56 through a wireless connection, such as by using any suitable wireless communications protocol known in the art. In further embodiments, the farm-level controller 56 is configured to send and receive control signals to and from the various wind turbines 52, such as for example, distributing real and/or reactive power demands across the wind turbines 52 of the wind farm 50.

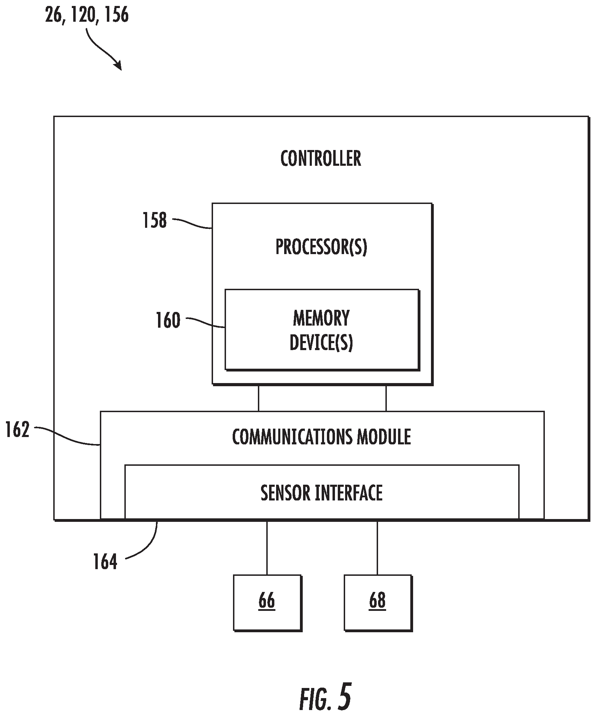

Referring now to FIG. 5, a block diagram of an embodiment of suitable components that may be included within the controller (such as any one of the converter controller 120, the turbine controller 26, and/or the farm-level controller 56 described herein) in accordance with example aspects of the present disclosure is illustrated. As shown, the controller may include one or more processor(s) 58, computer, or other suitable processing unit and associated memory device(s) 60 that may include suitable computer-readable instructions that, when implemented, configure the controller to perform various different functions, such as receiving, transmitting and/or executing wind turbine control signals (e.g., performing the methods, steps, calculations and the like disclosed herein).

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 60 may generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements.

Such memory device(s) 60 may generally be configured to store suitable computer-readable instructions that, when implemented by the processor(s) 58, configure the controller to perform various functions as described herein. Additionally, the controller may also include a communications interface 62 to facilitate communications between the controller and the various components of the wind turbine 10. An interface can include one or more circuits, terminals, pins, contacts, conductors, or other components for sending and receiving control signals. Moreover, the controller may include a sensor interface 64 (e.g., one or more analog- to-digital converters) to permit signals transmitted from the sensors 66, 68 to be converted into signals that can be understood and processed by the processor(s) 58.

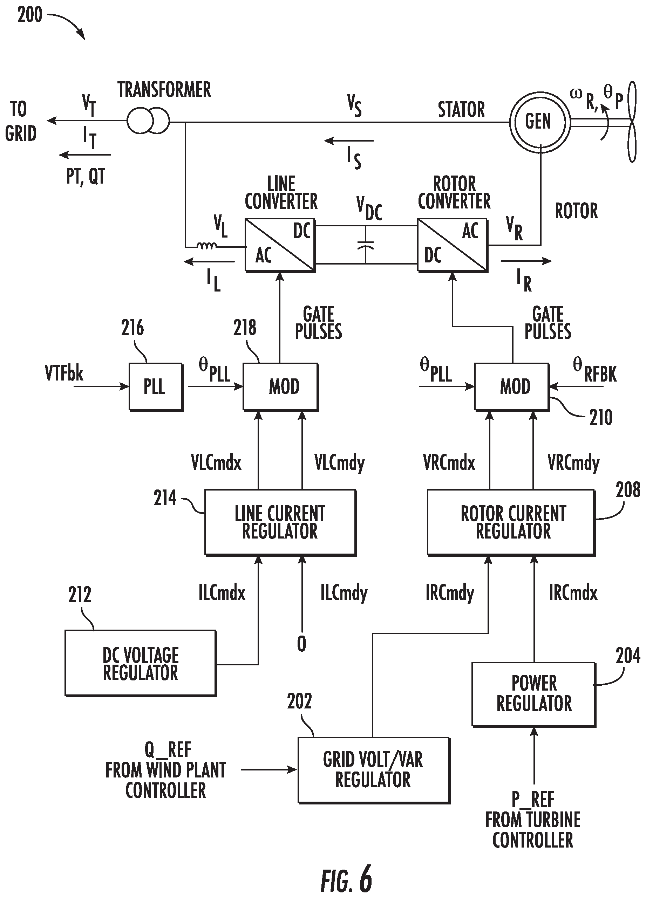

Referring now to FIG. 6, a schematic diagram of an embodiment of a system 200 having converter controls for providing grid-following control of a double-fed generator of a wind turbine according to the present disclosure is illustrated. More specifically, as shown, the system 200 may include many of the same features of FIG. 3 described herein, with components having the same reference characters representing like components. Further, as shown, the system 200 may include a control structure for controlling the line-side converter that is similar to the control structure shown in FIG. 3.

Moreover, as shown, the LSC control structure may include a DC voltage regulator 212 and a line current regulator 214. The DC voltage regulator 212 is configured to generate line-side current commands (ILCmdx and ILCmdy) for the line current regulator 214. The line current regulator 214 then generates line-side voltage commands (VLCmdx and VLCmdy) for a modulator 218. The modulator 218 also receives an output (e.g., a phase-locked loop angle) from a phase-locked loop (PLL) 216 to generate one or more gate pulses for the LSC 114. The phase-locked loop 216 typically generates its output using a voltage feedback signal.

Furthermore, as shown, the system 200 may also include a control structure for controlling the RSC 112 using grid-following characteristics. In addition, as shown, the system 200 may include a grid voltage/VAR regulator 202, a power regulator 204, a rotor current regulator 208, and a modulator 210.

In an embodiment, the grid voltage/VAR regulator 202 may receive, e.g., from the higher-level controller, a reactive power reference signal (Q_ref). In general, the system 200 is described herein with reference to a higher-level controller being a turbine controller 26. However, it should be appreciated that the disclosed system 200 may be implemented with the higher-level controller being a farm-level controller 56 or any other suitable higher-level controller, such as a turbine controller 26. In addition, the power regulator 204 receives a power reference signal (P_ref) from the turbine controller 26. Further, as shown in FIG. 6, outputs from the grid voltage/VAR regulator 202 and the power regulator 204 are commands (e.g., IRCmdy and IRCmdx) for rotor current, which are implemented in the rotor current regulator 208 by generating rotor voltage commands (e.g., VRCmdx and VRCmdy) for the modulator 210. The modulator 210 also receives a phase-locked loop angle from the phase-locked loop 216 and a rotor position feedback (Θ_{RFBK}) to generate one or more gate pulses for the rotor-side converter 112.

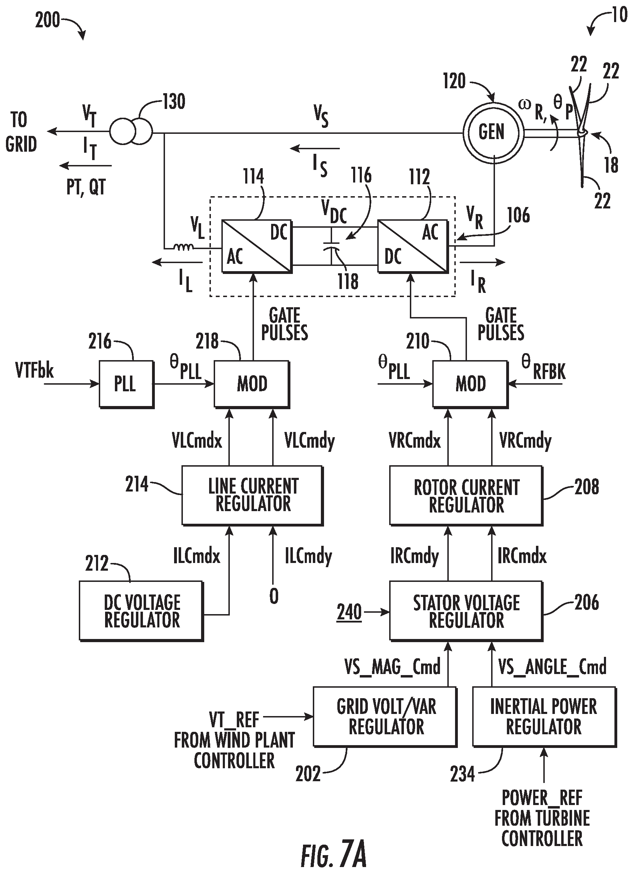

Referring now to FIG. 7A, a schematic diagram of the system 200 having converter controls for providing grid-forming control of a double-fed generator of a wind turbine according to the present disclosure is illustrated. More specifically, as shown, the system 200 may include many of the same features of FIGS. 3 and 6 described herein, with components having the same reference characters representing like components. Further, as shown, the system 200 may include a control structure for controlling the line-side converter that is similar to the control structure shown in FIGS. 3 and 6.

Furthermore, as shown, the system 200 may also include a control structure for controlling the RSC 112 using grid-forming characteristics. In particular, as shown in FIG. 7A, the system 200 may include a stator voltage regulator 206 for providing such grid-forming characteristics. In a grid-following control structure, the system 200 includes a power regulator 204, as shown in FIG. 6. In the grid-forming control structure, as shown in FIG. 7A, the system 200 includes an inertial power regulator 234 instead of the power regulator 204. In an embodiment, the grid voltage/VAR regulator 202 receives a voltage reference signal (e.g., VT_REF) from the farm-level controller 156 and generates a stator voltage magnitude command signal (e.g., VS_Mag_Cmd), whereas the inertial power regulator 234 receives a power reference signal (POWER_REF) from the turbine controller 26 and generates a stator voltage angle command signal (e.g., VS_Angle_Cmd). More specifically, in an embodiment, as shown, the stator voltage regulator 206 determines the rotor current command signals (e.g., IRCmdy and IRCmdx) as a function of the stator voltage magnitude command signal, the stator voltage angle command signal, and/or a stator current feedback signal 240 of the DFIG 102.

As mentioned, with grid-forming control, current changes rapidly when there are grid disturbances. Further, the control action is gradual to restore the steady-state operating conditions commanded by higher-level controls. The amount of current change is inversely related to the total impedance of the circuit. However, if the current exceeds limits, then the control responds rapidly to force the current to be within limits.

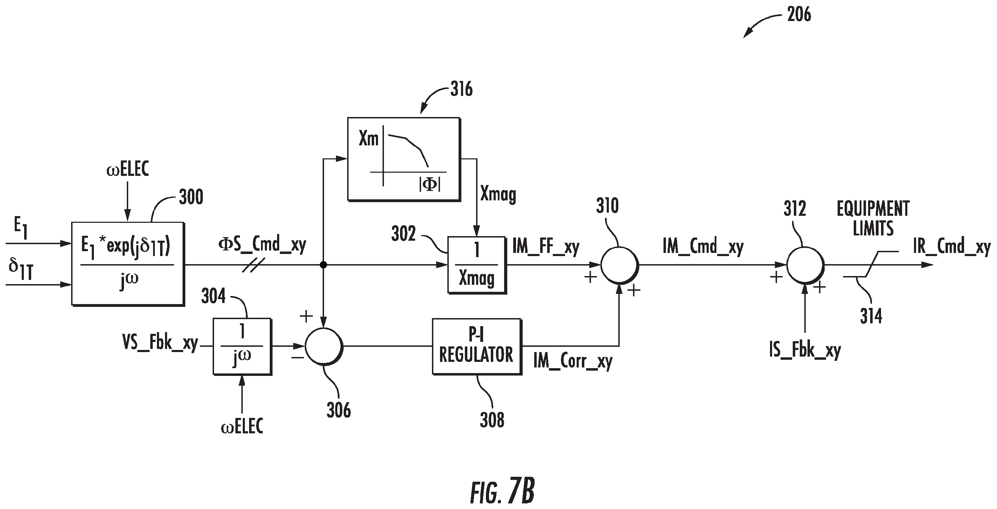

Referring now to FIG. 7B, a schematic diagram of an embodiment of the stator voltage regulator 206 for providing grid-forming characteristics according to the present disclosure is illustrated. As mentioned, the grid-forming voltage-source is realized on the stator voltage for implementing grid forming control for a double-fed wind turbine generator using the stator voltage regulator 206. More specifically, as shown, the stator voltage regulator 206 is configured to receive the internal voltage (E₁) (representative of a stator voltage) and phase shift signal (δ_{IT}) of the stator voltage with respect to the phase-locked loop angle. Further, as shown, the stator voltage commands (E₁, δ_{IT}) are converted to flux commands using a signal indicating electrical frequency ω_{elec}. Moreover, as shown, the stator voltage regulator 206 is configured to convert the voltage commands (E₁, δ_{IT}) to a stator flux command (ΦS_Cmd_xy) as shown at 300. Further, as shown, the stator voltage regulator 206 may determine or otherwise calculate an expected magnetizing reactance (Xmag) at a desired flux level using the stator flux command with the slopes and the y-intercepts of a saturation curve 316. Thus, as shown at 302, the stator voltage regulator 206 may then determine a magnetizing current feed forward signal (e.g., IM_FF_xy) as a function of the stator flux command and a function of the magnetizing reactance (Xmag) (e.g., 1/Xmag) from the saturation curve 316. This implementation assumes that the stator leakage flux is negligible compared to the magnetizing flux. More specifically, the process may utilize Equations (1) through (2) below: $Φs _ Cmd _ Mag = sqrt \left(ΦS_Cmd_{x}^{2}+ΦS_Cmd_{y}^{2}\right)$ Equation (1) For every Nth linear segment, Xmag is evaluated using Equation (2) below: $XmagN = SlpN * Φs _ Cmd _ Mag + IcptN$ Equation (2) Assuming the slopes are descending and the y-intercepts are ascending for any two consecutive linear segments, the final Xmag, which is used in the calculation of the magnetizing current feed forward signal, is estimated to be the minimum of all N Xmag calculations, for example, using Equation (3) below: $Xmag = min \left(Xmag1, Xmag2, … ,XmagN\right)$ Equation (3)

This process may be repeated at every execution step of the controller as needed. In addition, as shown, the stator voltage regulator 206 may also receive a stator voltage feedback signal (VS_Fbk_xy) and convert the stator voltage feedback signal into a flux feedback signal as shown at 304 using the electrical frequency ω_{elec}. Thus, as shown at 306, the stator voltage regulator 206 may then determine a difference between the flux feedback signal and the stator flux command. Further, as shown, the stator voltage regulator 206 may also determine a magnetizing current correction signal (IM_Corr_xy) via a proportional-integral (P-I) regulator 308. Accordingly, as shown at 310, the stator voltage regulator 206 can then add the magnetizing current feed forward signal (IM_FF_xy) to the magnetizing current correction signal (IM_Corr_xy) from the power regulator to determine the magnetizing current command (IM_Cmd_xy).

Furthermore, as shown at 312, the stator voltage regulator 206 may determine the rotor current command(s) (IR_Cmd_xy) as a function of the magnetizing current command (IM_Cmd_xy) and a stator current feedback signal (IS_Fbk_xy). Thus, in an embodiment, the measured stator current signal may be fed into the rotor current command so as to substantially decouple a stator responsive stator voltage from one or more grid characteristics. More specifically, in particular embodiments, as shown, the stator voltage regulator 206 may determine the rotor current command(s) by adding the magnetizing current command (IM_Cmd_xy) to the stator current feedback signal (IS_Fbk_xy). In addition, as shown, a limiter 314 may place limits to the rotor current command(s) (IR_Cmd_xy) as appropriate to respect equipment rating(s).

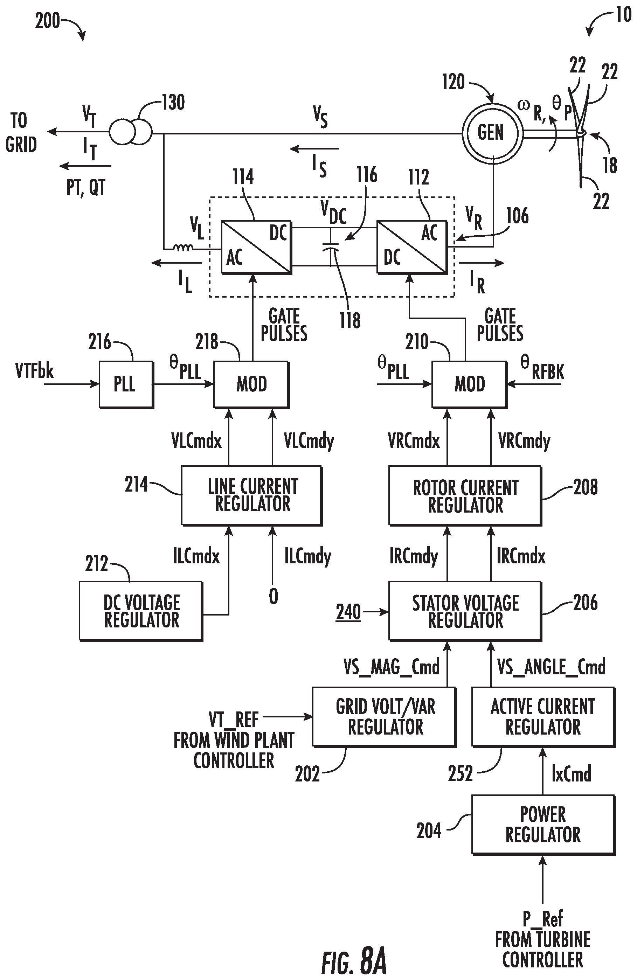

Referring now to FIG. 8A, a schematic diagram of the system 200 having converter controls for providing hybrid grid-forming and grid-following control of a double-fed generator of a wind turbine according to the present disclosure is illustrated. More specifically, as shown, the system 200 may include many of the same features of FIGS. 3 and 6-7 described herein, with components having the same reference characters representing like components. Further, as shown, the system 200 may include a control structure for controlling the line-side converter that is similar to the control structure shown in FIGS. 3 and 6-7.

Furthermore, as shown, the system 200 may also include a control structure for controlling the RSC 112 using hybrid grid-forming and grid-following characteristics. In particular, as shown in FIG. 8A, the system 200 may include the stator voltage regulator 206 for providing such grid-forming characteristics. In a grid-forming control structure, the system 200 includes an inertial power regulator 234, as shown in FIG. 7A. In the hybrid grid-forming and grid following control structure, the system 200 includes the power regulator 202 and an active current regulator 252 instead of the inertial power regulator 234. The power regulator 202 is configured to generate a current command signal (IxCmd) as a function of desired power output (P_Ref) from the turbine controller 26. Moreover, as shown, the downstream active current regulator 252 is configured to generate the stator voltage angle command signal (VS_Angle_Cmd) from the current command signal (IxCmd). Thus, the active current regulator 252 is configured to adapt rapidly to prioritize control of active current output over grid phase angle/frequency support. In such embodiments, the stator voltage angle command signal (VS_Angle_Cmd) is used to control the amount of real power flowing through the stator of the DFIG 102. The hybrid aspect of this control, therefore, relates to the use of fast control of output current only along one axis (e.g. x-axis) without fast control of output current along the other axis (e.g. y-axis).

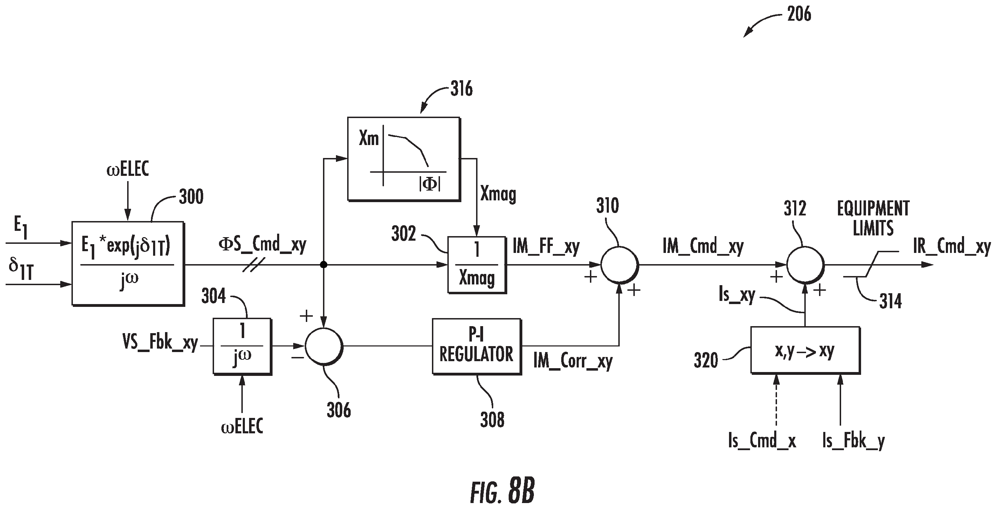

Referring now to FIG. 8B, a schematic diagram of an embodiment of the stator voltage regulator 206 for providing hybrid grid-forming and grid-following characteristics according to the present disclosure is illustrated. More specifically, as shown, the stator voltage regulator 206 may include many of the same features of FIG. 7A described herein, with components having the same reference characters representing like components. Further, as shown, the stator voltage regulator 206 may determine the magnetizing current command (IM_Cmd_xy) based on the higher level command for magnitude of the stator voltage (E_{I}) and the higher level command for angle of the stator voltage (δ_{IT}) with respect to the phase-locked loop angle, as shown in FIG. 7B.

In a pure grid-forming control structure, as shown in FIG. 7B, both x and y stator current feedbacks (Is_Fbk_x, Is_Fbk_y) are used in calculating rotor current commands (IR_Cmd_xy) to achieve the desired voltage-source characteristics without control of output (stator) current. In the hybrid grid-forming and grid-following control structure shown in FIG. 8B, the stator x-command (Is_Cmd_x) is used instead of the stator x-feedback (Is_Fbk_x). As such, the stator x-command (Is_Cmd_x) and the stator y-feedback (Is_Fbk_y) may be provided to a regulator 320 configured to output a reference current signal (Is_xy) as a function of the stator x-command (Is_Cmd_x) and the stator y-feedback (Is_Fbk_y). Accordingly, as shown at 312, the stator voltage regulator 206 may determine the rotor current command(s) (IR_Cmd_xy) as a function of the magnetizing current command (IM_Cmd_xy) and the reference current signal (Is_xy). More specifically, in particular embodiments, as shown, the stator voltage regulator 206 may determine the rotor current command(s) (IR_Cmd_xy) by adding the magnetizing current command (IM_Cmd_xy) to the reference current signal (Is_xy). In addition, as shown, a limiter 314 may place limits to the rotor current command(s) (IR_Cmd_xy) as appropriate to respect equipment rating(s).

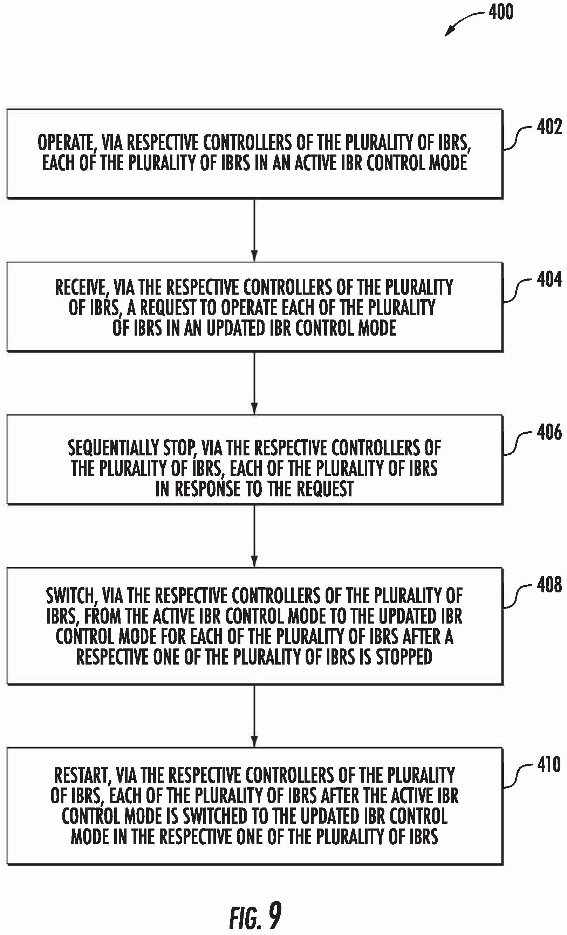

Referring now to FIG. 9, a flow diagram of an embodiment of a method 400 for switching between converter control modes via respective controllers of a plurality of inverter-based resources (IBRs) connected to an electrical grid according to the present disclosure is illustrated. In an embodiment, for example, the IBRs may be wind turbine power systems each having at least one power converter and a generator (such as a DFIG 102). In general, the method 400 is described herein with reference to the wind turbine power system 100 of FIGS. 1-8B. However, it should be appreciated that the disclosed method 400 may be implemented with any other suitable power generation systems having any other suitable configurations. In addition, although FIG. 9 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (402), the method 400 includes operating, via respective controllers (such as the turbine controllers 26) of the plurality of IBRs, each of the plurality of IBRs in an active IBR control mode. For example, the active control mode may be one of a grid-following mode, a grid-forming mode, and a hybrid grid-forming and grid-following mode, as described above. As such, the respective controllers may include the structure and logic (e.g., stored in the memory devices thereof) to implement any of the grid-following mode, the grid-forming mode, and the hybrid grid-forming and grid-following mode in response to a request from a higher-level controller (such as the wind farm controller 56) and/or a grid operator.

As shown at (404), the method 400 includes receiving, via the respective controllers of the plurality of IBRs, a request to operate each of the plurality of IBRs in an updated IBR control mode. For example, the method 400 may include receiving the request from the higher-level controller and/or the grid operator. For instance, the grid operator may provide the request in response to changes in operating conditions of the electrical grid. The updated IBR control mode is different from the active IBR control mode. As such, the updated control mode may be another of the grid-following mode, the grid-forming mode, and the hybrid grid-forming and grid-following mode.

As shown at (406), the method 400 includes sequentially stopping, via the respective controllers of the plurality of IBRs, each of the plurality of IBRs. In embodiments, stopping each of the plurality of IBRs may include halting operation (e.g., ceasing current exchange with the electrical grid) of the IBR while maintaining the IBR in a ready state. In some embodiments, the respective controllers may receive (e.g., from the higher-level controller and/or the grid operator) a sequence for stopping the plurality of IBRs. More particularly, the sequence for stopping the plurality of IBRs can specify an order in which to stop the IBRs (for example, via identifiers for the respective IBRs and corresponding stop times). The sequence for stopping the plurality of IBRs may be received simultaneously with or separate from the request to operate each of the plurality of IBRs in the updated IBR control mode. Accordingly, the respective controllers can stop the respective IBRs based on the sequence for stopping the plurality of IBRs.

The sequence for stopping the plurality of IBRs may be a fixed sequence or a dynamic sequence. For instance, the higher-level controller and/or the grid operator may be configured to determine the sequence for stopping the plurality of IBRs based on one or more feedback signals from the respective controllers. In general, feedback signals (e.g., power feedback signals, frequency feedback signals, speed feedback signals, voltage feedback signals, etc.) may be measured by one or more sensors and/or determined by (e.g., according to known mathematical techniques) one or more controllers (e.g., based on measurements received from the one or more sensors). Alternatively, the sequence for stopping the plurality of IBRs may be predetermined and specified, for example, by the grid operator.

As shown at (408), the method 400 includes switching, via the respective controllers of the plurality of IBRs, from the active IBR control mode to the updated IBR control mode for each of the plurality of IBRs after a respective one of the plurality of IBRs is stopped. That is, once rotation (or current exchange with the electrical grid) of the respective IBR is stopped, the corresponding controller can stop executing (or disable) the active IBR control mode and can execute (or enable) the updated IBR control mode.

As shown at (410), the method 400 includes restarting, via the respective controllers of the plurality of IBRs, each of the plurality of IBRs after the active IBR control mode is switched to the updated IBR control mode in the respective one of the plurality of IBRs. More particularly, in embodiments, the controllers can restart the IBRs according to a sequence for restarting the plurality of IBRs. In some embodiments, the sequence for restarting the plurality of IBRs is the same as the sequence for stopping the plurality of IBRs. That is, the IBRs may be restarted in the same order in which the IBRs were stopped at (406). For example, in such embodiments, a first controller can stop a first IBR specified by the sequence in response to the request. Further, a second controller can stop a second IBR specified by the sequence in response to the request and after the first IBR is restarted. That is, in such embodiments, subsequent controllers can stop respective subsequent IBRs specified by the sequence in response to the request and after a prior IBR specified by the sequence is restarted. Generally, it may be beneficial to stop one or a small group of IBR and wait for them to be fully restarted before stopping the next one or group of IBR to minimize disruption to the electrical grid.

In other embodiments, the sequence for restarting the plurality of IBRs may differ from the sequence for stopping the plurality of IBRs. In such embodiments, the second controller can stop the second IBR specified by the sequence in response to the request and after the first IBR is stopped but prior to the first IBR being restarted. That is, in such embodiments, subsequent controllers can stop respective subsequent IBRs specified by the sequence in response to the request and after a prior IBR specified by the sequence is stopped but prior to the prior IBR being restarted. As such, one or more subsequent IBRs may be restarted prior to one or more prior IBRs being restarted.

The sequence for restarting the plurality of IBRs may be a fixed sequence or a dynamic sequence. For instance, the higher-level controller and/or the grid operator may be configured to determine the sequence for restarting the plurality of IBRs based on one or more feedback signals, as mentioned above regarding the sequence for stopping the plurality of IBRs. As another example, the sequence for restarting the plurality of IBRs may be predetermined and specified, for example, by the grid operator.

In embodiments, the method 400 can include controlling, via the respective controllers, each of the plurality of IBRs based on the updated IBR control mode when the respective IBR is restarted. For instance, after restarting the respective IBRs, the respective controllers can implement the grid-following control mode, the grid-forming control mode, or hybrid grid-forming and grid-following control mode based on the updated IBR control mode.

Sequentially stopping and restarting the plurality of IBRs when switching between the active IBR control mode and the updated IBR control mode can limit disturbances to the electrical grid by minimizing a number of IBRs that are not operating at any given time during the switching process. Further, minimizing the number of non-operational IBRs can improve the efficiency of the farm during the switching process as compared to simultaneously stopping each IBR in the farm to execute the switching process.

Further aspects of the invention are provided by the subject matter of the following clauses:

A method for switching a control mode of a plurality of inverter-based resources (IBRs) connected to an electrical grid, the method comprising: operating, via respective controllers of the plurality of IBRs, each of the plurality of IBRs in an active IBR control mode; receiving, via the respective controllers of the plurality of IBRs, a request to operate each of the plurality of IBRs in an updated IBR control mode; sequentially stopping, via the respective controllers of the plurality of IBRs, each of the plurality of IBRs in response to the request; switching, via the respective controllers of the plurality of IBRs, from the active IBR control mode to the updated IBR control mode for each of the plurality of IBRs after a respective one of the plurality of IBRs is stopped; and restarting, via the respective controllers of the plurality of IBRs, each of the plurality of IBRs after the active IBR control mode is switched to the updated IBR control mode in the respective one of the plurality of IBRs.

The method of any preceding clause, wherein each of the plurality of IBRs comprises a power converter having a line side converter electrically coupled to a rotor side converter, the updated IBR control mode and the active IBR control mode configured to control operation of only the rotor side converter.

The method of any preceding clause, wherein restarting, via the respective controllers of the plurality of IBRs, each of the plurality of IBRs after the active IBR control mode is switched to the updated IBR control mode in the respective one of the plurality of IBRs further comprises sequentially restarting, via the respective controllers of the plurality of IBRs, each of the plurality of IBRs.

The method of any preceding clause, wherein a sequence for restarting the plurality of IBRs is a same sequence as a sequence for stopping the plurality of IBRs.

The method of any preceding clause, wherein a sequence for stopping each of the IBRs specifies a first IBR to be stopped and a second IBR to be stopped after the first IBR, and wherein the second IBR is stopped after the first IBR is restarted.

The method of any preceding clause, wherein a sequence for stopping each of the plurality of IBRs is a fixed sequence or a dynamic sequence.

The method of any preceding clause, wherein the active IBR control mode comprises one of a grid-following mode, a grid-forming mode, or a hybrid mode, and the updated IBR control mode comprises another of the grid-following mode, the grid-forming mode, or the hybrid mode.

The method of any preceding clause, further comprising, for each of the plurality of IBRs, controlling the respective one of the plurality of IBRs based on the updated IBR control mode when the respective one of the plurality of IBRs is restarted.

The method of any preceding clause, wherein each of the plurality of IBRs comprise a doubly-fed power conversion system.

The method of any preceding clause, herein each of the plurality of IBRs is a wind turbine.

A wind farm, comprising: a plurality of wind turbines each comprising a respective converter controller comprising at least one processor, the at least one processor configured to perform a plurality of operations, the plurality of operations comprising: operating a respective one of the plurality of wind turbines in an active wind turbine control mode; receiving a request to operate the respective one of the plurality of wind turbines in an updated wind turbine control mode; stopping the respective one of the plurality of wind turbines based on a sequence for stopping the plurality of wind turbines; switching from the active wind turbine control mode to the updated wind turbine control mode after the respective one of the plurality of wind turbines is stopped; and restarting the respective one of the plurality of wind turbines after the active wind turbine control mode is switched to the updated wind turbine control mode.

The wind farm of any preceding clause, wherein each of the plurality of wind turbines comprises a power converter having a line side converter electrically coupled to a rotor side converter, the updated wind turbine control mode and the active wind turbine control mode configured to control operation of only the rotor side converter.

The wind farm of any preceding clause, wherein restarting the respective one of the plurality of wind turbines after the active wind turbine control mode is switched to the updated wind turbine control mode further comprises restarting the respective one of the plurality of wind turbines based on a sequence for restarting the plurality of wind turbines.

The wind farm of any preceding clause, wherein a sequence for restarting the plurality of wind turbines is a same sequence as a sequence for stopping the plurality of wind turbines.

The wind farm of any preceding clause, wherein a sequence for stopping each of the wind turbines specifies a first wind turbine to be stopped and a second wind turbine to be stopped after the first wind turbine, and wherein the second wind turbine is stopped after the first wind turbine is restarted.

The wind farm of any preceding clause, wherein the plurality of operations further comprise receiving the sequence for stopping the plurality of wind turbines from a higher-level controller.

The wind farm of any preceding clause, wherein the sequence for stopping the plurality of wind turbines is a fixed sequence or a dynamic sequence.

The wind farm of any preceding clause, wherein the active wind turbine control mode comprises one of a grid-following mode, a grid-forming mode, or a hybrid mode, and the updated wind turbine control mode comprises another of the grid-following mode, the grid-forming mode, or the hybrid mode.

The wind farm of any preceding clause, wherein the plurality of operations further comprise, controlling the respective one of the plurality of wind turbines based on the updated wind turbine control mode when the respective one of the plurality of wind turbines is restarted.

The wind farm of any preceding clause, wherein each of the plurality of wind turbines comprise a doubly-fed power conversion system.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for switching a control mode of a plurality of inverter-based resources (IBRs) connected to an electrical grid, the method comprising:
operating, via respective controllers of the plurality of IBRs, each of the plurality of IBRs in an active IBR control mode;
receiving, via the respective controllers of the plurality of IBRs, a request to operate each of the plurality of IBRs in an updated IBR control mode;
sequentially stopping, via the respective controllers of the plurality of IBRs, each of the plurality of IBRs in response to the request;
switching, via the respective controllers of the plurality of IBRs, from the active IBR control mode to the updated IBR control mode for each of the plurality of IBRs after a respective one of the plurality of IBRs is stopped; and
restarting, via the respective controllers of the plurality of IBRs, each of the plurality of IBRs after the active IBR control mode is switched to the updated IBR control mode in the respective one of the plurality of IBRs.

2. The method of claim 1, wherein each of the plurality of IBRs comprises a power converter having a line side converter electrically coupled to a rotor side converter, the updated IBR control mode and the active IBR control mode configured to control operation of only the rotor side converter.

3. The method of claim 1 or 2, wherein restarting, via the respective controllers of the plurality of IBRs, each of the plurality of IBRs after the active IBR control mode is switched to the updated IBR control mode in the respective one of the plurality of IBRs further comprises sequentially restarting, via the respective controllers of the plurality of IBRs, each of the plurality of IBRs.

4. The method of claim 3, wherein a sequence for restarting the plurality of IBRs is a same sequence as a sequence for stopping the plurality of IBRs.

5. The method of any of the preceding claims, wherein a sequence for stopping each of the IBRs specifies a first IBR to be stopped and a second IBR to be stopped after the first IBR, and wherein the second IBR is stopped after the first IBR is restarted.

6. The method of any of the preceding claims, wherein a sequence for stopping each of the plurality of IBRs is a fixed sequence or a dynamic sequence.

7. The method of any of the preceding claims, wherein the active IBR control mode comprises one of a grid-following mode, a grid-forming mode, or a hybrid mode, and the updated IBR control mode comprises another of the grid-following mode, the grid-forming mode, or the hybrid mode.

8. The method of any of the preceding claims, further comprising, for each of the plurality of IBRs, controlling the respective one of the plurality of IBRs based on the updated IBR control mode when the respective one of the plurality of IBRs is restarted.

9. The method of any of the preceding claims, wherein each of the plurality of IBRs comprise a doubly-fed power conversion system.

10. The method of any of the preceding claims, wherein each of the plurality of IBRs is a wind turbine.

11. A wind farm, comprising:
a plurality of wind turbines, in particular wherein each of the plurality of wind turbines comprise a doubly-fed power conversion system, each comprising a respective converter controller comprising at least one processor, the at least one processor configured to perform a plurality of operations, the plurality of operations comprising:
operating a respective one of the plurality of wind turbines in an active wind turbine control mode;
receiving a request to operate the respective one of the plurality of wind turbines in an updated wind turbine control mode;
stopping the respective one of the plurality of wind turbines based on a sequence for stopping the plurality of wind turbines;
switching from the active wind turbine control mode to the updated wind turbine control mode after the respective one of the plurality of wind turbines is stopped; and
restarting the respective one of the plurality of wind turbines after the active wind turbine control mode is switched to the updated wind turbine control mode.

12. The wind farm of claim 11, wherein each of the plurality of wind turbines comprises a power converter having a line side converter electrically coupled to a rotor side converter, the updated wind turbine control mode and the active wind turbine control mode configured to control operation of only the rotor side converter.

13. The wind farm of claim 11 or 12, wherein restarting the respective one of the plurality of wind turbines after the active wind turbine control mode is switched to the updated wind turbine control mode further comprises restarting the respective one of the plurality of wind turbines based on a sequence for restarting the plurality of wind turbines, in particular wherein a sequence for restarting the plurality of wind turbines is a same sequence as a sequence for stopping the plurality of wind turbines.

14. The wind farm of any of claims 11 to 13, wherein a sequence for stopping each of the wind turbines specifies a first wind turbine to be stopped and a second wind turbine to be stopped after the first wind turbine, and wherein the second wind turbine is stopped after the first wind turbine is restarted.

15. The wind farm of any of claims 11 to 14, wherein the plurality of operations further comprise receiving the sequence for stopping the plurality of wind turbines from a higher-level controller and/or wherein the plurality of operations further comprise, controlling the respective one of the plurality of wind turbines based on the updated wind turbine control mode when the respective one of the plurality of wind turbines is restarted.
